# EUROPÄISCHE PATENTSCHRIFT

(11) **EP 1 466 113 B1**
(45) Veröffentlichungstag und Bekanntmachung des Hinweises auf die Patenterteilung: **29.06.2005**
(21) Anmeldenummer: 03704396.5
(22) Anmeldetag: 15.01.2003
(51) Int. Cl.: F16H 61/02, E02F 9/20

(54) **STEUERUNG EINES ANTRIEBSSTRANGES**
CONTROL OF A DRIVETRAIN
COMMANDE DE CHAINE CINEMATIQUE

(30) Priorität: 18.01.2002 DE 10201838
(43) Veröffentlichungstag der Anmeldung: 13.10.2004
(73) Patentinhaber: ZF FRIEDRICHSHAFEN Aktiengesellschaft, 88038 Friedrichshafen (DE)
(72) Erfinder: BURKHART, Hugo, 88213 Ravensburg (DE)
(86) Internationale Anmeldenummer: PCT/EP2003/000317
(87) Internationale Veröffentlichungsnummer: WO 2003/060353

(56) Entgegenhaltungen:
- DE-A- 2 613 300
- DE-A- 19 758 240
- US-A- 3 187 497
- US-A- 3 424 029
- US-A- 4 776 751

## Beschreibung

Die Erfindung betrifft eine Steuerung eines Antriebsstrangs eines Radladers mit den Merkmalen des Oberbegriffs des Anspruchs 1 bzw. 2 bzw. 3, wie sie aus der US-A-3424029 bekannt ist.

Radlader sind vielfach mit einer Schaufel ausgestattet, die über einen Nebenabtrieb (PTO) des Lastschaltgetriebes des Radladers z. B. zum Füllen und Entleeren oder "beim Arbeiten an der Wand" betätigt wird. Herkömmliche Lastschaltgetriebe von Radladern halten die Lastschaltkupplung beim Füllen und Entleeren der Schaufel oder "beim Arbeiten an der Wand" geschlossen, so dass ein Großteil der Antriebsleistung im Drehmomentwandler verheizt wird. Zur Beseitigung dieses Nachteils ist es bekannt, ab einem bestimmten Bremsdruck auf der Betriebsbremse die Lastschaltkupplung zu öffnen, damit der Drehmomentwandler keine Leistung mehr aufnimmt und die gesamte Antriebsleistung zum Nebenabtrieb des Lastschaltgetriebes des Radladers geht. Nachteil dabei ist, dass keinerlei Vortriebskraft mehr an den Rädern des Radladers ist, weil aktiv gebremst wird und zudem bei abgeschalteten Lastschaltkupplungen kein Gang mehr geschaltet ist.

Aus der PCT/EP 95/01520 ist eine Vorrichtung zur Reduzierung des Drucks einer Lastschaltkupplung bekannt, die bei Antrieben für Arbeitsmaschinen verwendet werden. Ein Druckreduzierventil wird bei diesem Stand der Technik dazu verwendet eine Lastschaltkupplung im Getriebe zum Rutschen zu bringen, so dass die Arbeitsmaschine nur noch langsam fährt und z. B. exakt an eine bestimmte Position bewegt werden kann. Eine Verbindung zu den Anforderungen an einen Radlader beim Füllen/Entleeren der Schaufel oder "beim Arbeiten an der Wand" ist der PCT/EP 95/01520 nicht zu entnehmen.

Aufgabe der Erfindung ist es, eine Steuerung eines Antriebsstrangs zu schaffen, die einen Radlader beim Füllen und Entleeren der "beim Arbeiten an der Wand" unterstützt und die Nachteile fehlender Vortriebskraft an den Rädern vermeidet.

Die Lösung der Aufgabe erfolgt mit einer Steuerung eines Antriebsstrangs eines Radladers mit den Merkmalen des Anspruchs 1 bzw.2 bzw.3. Ausgestaltung der Erfindung ist in dem Unteranspruch Eine dargestellt.

Gemäß der Erfindung weist eine Steuerung eines Antriebsstrangs eines Radladers, eine über Druckmittel betätigte Bremse und ein Getriebe auf, das über einen Drehmomentwandler betrieben wird. Das Getriebe enthält mindestens einen über jeweils eine Lastschaltkupplung betätigbaren Vorwärts- und/oder Rückwärtsgang und einen Nebenabtrieb. Gemäß der Erfindung wird bei Überschreiten eines vorbestimmten Werts der vom Getriebe an den Nebenabtrieb abgegebenen Leistung der Druck der zugeschalteten Lastschaltkupplung für den Vorwärts- oder Rückwärtsgang auf ein Restniveau reduziert. Als wesentliche Vorteile der Steuerung des Antriebsstrangs gemäß der Erfindung ergeben sich beim Fahren volle Antriebsleistung des Motors auf dem Drehmomentwandler des Radladers und beim Füllen und Entleeren der Schaufel oder "beim Arbeiten an der Wand" die Antriebsleistung des Motors am Nebenabtrieb, so dass Verheizen von Leistung im Drehmomentwandler vermieden wird. Mit der Steuerung des Antriebsstrangs gemäß der Erfindung sind kleinere Kühler möglich. Die Leistung des Motors kann bei gleicher Fahrzeuggröße kleiner ausgelegt werden und die Hebe- bzw. Brechleistung des Radladers erhöht werden. Mit der Steuerung des Antriebsstrangs gemäß der Erfindung wird automatisch die Lastverteilung auf Getriebe und Nebenabtrieb (PTO) optimiert.

In der DE-PS 35 10 803 ist ein Druckreduzierventil beschrieben, das eine Kupplungs- und Modulierfunktion ermöglicht. Das Druckreduzierventil hat dabei die Aufgabe ein Arbeitsfahrzeug schnell bzw. ruckartig anfahren zu lassen, so dass z. B. ein Schaufellader ruckartig ins Erdreich gestoßen werden kann. Mit dem vorliegenden Arbeits- bzw. Einsatzgebiet ist diese bekannte Druckreduktion und dessen Steuerung, durch die das Gegenteil erreicht werden soll, nicht vergleichbar.

Die Erfindung wird im folgenden anhand eines bevorzugten Ausführungsbeispiels beschrieben.

Eine Steuerung eines Antriebsstrangs eines Radladers weist eine Druckmittel betätigte Bremse und ein Getriebe auf, das über einen Drehmomentwandler betrieben wird. Das Getriebe enthält mehrere über jeweils eine Lastschaltkupplung betätigbare Vorwärts- und/oder Rückwärtsgänge und einen Nebenabtrieb, an den eine Schaufel angelenkt ist.

Bei Überschreiten eines vorbestimmten Werts der vom Getriebe an den Nebenabtrieb abgegebenen Leistung wird der Druck der zugeschalteten Lastschaltkupplung für den Vorwärts- oder Rückwärtsgang auf ein Restniveau reduziert, die Lastschaltkupplung für den 1 Vorwärtsgang zugeschaltet, und der Druck auf die Bremse reduziert, so dass bestmöglich die Antriebskraft des Radladers beibehalten wird.

## Patentansprüche

1. Steuerung eines Antriebsstrangs eines Radladers mit einer über Druckmittel betätigten Bremse und einem Getriebe mit veränderbarer Übersetzung, wobei das Getriebe über einen Drehmomentwandler betrieben wird und mindestens zwei über jeweils eine Lastschaltkupplung betätigbare Vorwärts- und/oder Rückwärtsgänge und einen Nebenabtrieb enthält, wobei bei Überschreiten eines vorbestimmten Werts der vom Getriebe an den Nebenabtrieb abgegebenen Leistung der Druck der zugeschalteten Lastschaltkupplung für den Vorwärts- oder Rückwärtsgang auf ein Restniveau reduziert wird, **dadurch gekennzeichnet, dass** bei Überschreiten eines vorbestimmten Werts der vom Getriebe an den Nebenabtrieb abgegebenen Leistung die Übersetzung des Getriebes so verändert wird, so dass bestmöglich die Antriebskraft des Radladers beibehalten wird.

2. Steuerung eines Antriebsstrangs eines Radladers mit einer über Druckmittel betätigten Bremse und einem Getriebe mit veränderbarer Übersetzung, wobei das Getriebe über einen Drehmomentwandler betrieben wird und mindestens zwei über jeweils eine Lastschaltkupplung betätigbare Vorwärts- und/oder Rückwärtsgänge und einen Nebenabtrieb enthält, wobei bei Überschreiten eines vorbestimmten Werts der vom Getriebe an den Nebenabtrieb abgegebenen Leistung der Druck der zugeschalteten Lastschaltkupplung für den Vorwärts- oder Rückwärtsgang auf ein Restniveau reduziert wird, **dadurch gekennzeichnet, dass** bei Überschreiten eines vorbestimmten Werts der vom Getriebe an den Nebenabtrieb abgegebenen Leistung die Lastschaltkupplung für den 1 Vorwärtsgang zugeschaltet wird, so dass bestmöglich die Antriebskraft des Radladers beibehalten wird.

3. Steuerung eines Antriebsstrangs eines Radladers mit einer über Druckmittel betätigten Bremse und einem Getriebe mit veränderbarer Übersetzung, das über einen Drehmomentwandler betrieben wird und einen über jeweils eine Lastschaltkupplung betätigbaren Vorwärts- und/oder Rückwärtsgang und einen Nebenabtrieb enthält, wobei bei Überschreiten eines vorbestimmten Werts der vom Getriebe an den Nebenabtrieb abgegebenen Leistung der Druck der zugeschalteten Lastschaltkupplung für den Vorwärts- oder Rückwärtsgang auf ein Restniveau reduziert wird, **dadurch gekennzeichnet, dass** bei Überschreiten eines vorbestimmten Werts der vom Getriebe an den Nebenabtrieb abgegebenen Leistung der Druck auf die Bremse reduziert wird.

4. Steuerung eines Antriebsstrangs für einen Radlader nach Anspruch 2, **dadurch gekennzeichnet, dass** bei Überschreiten eines vorbestimmten Werts der vom Getriebe an den Nebenabtrieb abgegebenen Leistung der Druck auf die Bremse reduziert wird.

## Claims

1. Control of a drive train of a wheel loader, with a brake which is operated via pressure medium and a transmission with a variable transmission ratio, wherein the transmission is operated via a torque converter and includes at least two forward and/or reverse gears, which can be operated via a respective change-under-load clutch, and a power-take off, wherein when the power which is delivered by the transmission to the power take-off exceeds a predetermined value, the pressure of the engaged change-under-load clutch for forward or reverse gear is reduced to a residual level, **characterised in that** when the power which is delivered by the transmission to the power take-off exceeds a predetermined value, the transmission ratio of the transmission is varied such that the drive force of the wheel loader is retained in optimum fashion.

2. Control of a drive train of a wheel loader, with a brake which is operated via pressure medium and a transmission with a variable transmission ratio, wherein the transmission is operated via a torque converter and includes at least two forward and/or reverse gears, which can be operated via a respective change-under-load clutch, and a power-take off, wherein when the power which is delivered by the transmission to the power take-off exceeds a predetermined value, the pressure of the engaged change-under-load clutch for forward or reverse gear is reduced to a residual level,
**characterised in that** when the power which is delivered by the transmission to the power take-off exceeds a predetermined value, the change-under-load clutch for the 1st forward gear is engaged, so that the drive force of the wheel loader is retained in optimum fashion.

3. Control of a drive train of a wheel loader, with a brake which is operated via pressure medium and a transmission with a variable transmission ratio which is operated via a torque converter and includes a forward and/or reverse gear, which can be operated via a respective change-under-load clutch, and a power-take off, wherein when the power which is delivered by the transmission to the power take-off exceeds a predetermined value, the pressure of the engaged change-under-load clutch for forward or reverse gear is reduced to a residual level, **characterised in that** when the power which is delivered by the transmission to the power take-off exceeds a predetermined value, the pressure on the brake is reduced.

4. Control of a drive train for a wheel loader according to Claim 2, **characterised in that** when the power which is delivered by the transmission to the power take-off exceeds a predetermined value, the pressure on the brake is reduced.

## Revendications

1. Commande d'une chaîne cinématique d'un chargeur à roues avec un frein actionné par l'intermédiaire de moyens de mise sous pression et une transmission à démultiplication variable, dans laquelle la transmission est actionnée par l'intermédiaire d'un convertisseur de couple et comprend au moins deux rapports de marche avant et/ou de marche arrière et une sortie secondaire, la pression de l'embrayage à commutation de charge enclenché pour le rapport de marche avant ou de marche arrière étant réduite à un niveau minimal lors du dépassement d'une valeur prédéterminée de la puissance développée par la transmission au niveau de la sortie secondaire, **caracté- risée en ce que**, lors du dépassement d'une valeur prédéterminée de la puissance développée par la transmission au niveau de la sortie secondaire, la démultiplication de la transmission est modifiée de façon à ce que la force d'entraînement du chargeur à roues soit maintenue le mieux possible.

2. Commande d'une chaîne cinématique d'un chargeur à roues avec un frein actionné par l'intermédiaire de moyens de mise sous pression et une transmission à démultiplication variable, dans laquelle la transmission est actionnée par l'intermédiaire d'un convertisseur de couple et comprend au moins deux rapports de marche avant et/ou de marche arrière et une sortie secondaire, la pression de l'embrayage à commutation de charge enclenché pour le rapport de marche avant ou de marche arrière étant réduite à un niveau minimal lors du dépassement d'une valeur prédéterminée de la puissance développée par la transmission au niveau de la sortie secondaire, **caracté- risée en ce que**, lors du dépassement d'une valeur prédéterminée de la puissance développée par la transmission au niveau de la sortie secondaire, l'embrayage à commutation de charge est enclenché pour le premier rapport de marche avant de façon à ce que la force d'entraînement du chargeur à roues soit maintenue le mieux possible.

3. Commande d'une chaîne cinématique d'un chargeur à roues avec un frein actionné par l'intermédiaire de moyens de mise sous pression et une transmission à démultiplication variable, actionnée par l'intermédiaire d'un convertisseur de couple et qui comprend un rapport de marche avant et/ou de marche arrière et une sortie secondaire enclenchés par l'intermédiaire d'un embrayage à commutation de charge, la pression de l'embrayage à commutation de charge enclenché pour le rapport de marche avant ou de marche arrière étant réduite à un niveau minimal lors du dépassement d'une valeur prédéterminée de la puissance développée par la transmission au niveau de la sortie secondaire, **caractérisée en ce que**, lors du dépassement d'une valeur prédéterminée de la puissance développée par la transmission au niveau de la sortie secondaire, la pression sur le frein est réduite.

4. Commande d'une chaîne cinématique pour un chargeur à roues selon la revendication 2, **caractérisée en ce que**, lors du dépassement d'une valeur prédéterminée de la puissance développée par la transmission au niveau de la sortie secondaire, la pression sur le frein est réduite.
